# EUROPÄISCHE PATENTSCHRIFT

(11) **EP 3 752 911 B1**
(45) Veröffentlichungstag und Bekanntmachung des Hinweises auf die Patenterteilung: **23.06.2021**
(21) Anmeldenummer: 19762097.4
(22) Anmeldetag: 19.08.2019
(51) Int. Cl.: G06F 8/61, G06F 21/57, G06F 8/65, G06F 11/10

(54) **VERFAHREN ZUM INSTALLIEREN EINES PROGRAMMCODEPAKETS IN EIN GERÄT SOWIE GERÄT UND KRAFTFAHRZEUG**
METHOD FOR INSTALLING A PROGRAM CODE PACKET ONTO A DEVICE, DEVICE, AND MOTOR VEHICLE
PROCÉDÉ POUR L'INSTALLATION D'UN PAQUET DE CODE DE PROGRAMME DANS UN APPAREIL AINSI QU'APPAREIL ET VÉHICULE À MOTEUR

(30) Priorität: 04.09.2018 DE 102018215011
(43) Veröffentlichungstag der Anmeldung: 23.12.2020
(73) Patentinhaber: Audi AG, 85045 Ingolstadt (DE)
(72) Erfinder: MEYER, Jürgen, 85125 Haunstetten (DE)
(86) Internationale Anmeldenummer: PCT/EP2019/072104
(87) Internationale Veröffentlichungsnummer: WO 2020/048756

(56) Entgegenhaltungen:
- DE-A1-102012 220 132
- US-A1- 2018 145 991

## Beschreibung

Die Erfindung betrifft ein Verfahren zum Einspielen oder Installieren eines Programmcodepakets in ein Gerät, beispielsweise in ein mobiles Endgerät oder in ein Steuergerät eines Kraftfahrzeugs. Durch das Einspielen des Programmcodepakets wird dieses in dem Gerät als ausführbare Software verfügbar gemacht. Das Programmcodepaket kann beispielsweise ein Betriebssystem für das Gerät enthalten und/oder durch das Einspielen ergibt sich ein Update der Betriebssoftware oder des Betriebssystems in dem Gerät. Zu der Erfindung gehören auch ein Gerät, das gemäß dem Verfahren betrieben werden kann, und ein Kraftfahrzeug mit einem solchen Gerät.

In einem Steuergerät eines Kraftfahrzeugs kann eine Prozessoreinrichtung vorgesehen oder bereitgestellt sein, die einen Mikroprozessor oder mehrere Mikroprozessoren vorsehen kann und für den Betrieb ein Betriebssystem, wie beispielsweise Linux oder Posix oder QNX ® verwenden kann. Für ein Update von Software des Betriebssystems oder allgemein der Prozessoreinrichtung, kann folgender Ablauf vorgesehen sein. Zunächst wird ein Programmcodepaket, beispielsweise ein sogenanntes Flashfile, inklusive eines Referenz-Prüfsummenwerts (zum Beispiel HASH-Wert) über eine Datenverbindung aus einer geräteexternen Datenquelle empfangen. Die Datenverbindung kann beispielsweise auf der Grundlage eines Ethernet und/oder CAN-Busses (CAN - Controller Area Network) und/oder eines Flexray-Busses gebildet sein. Nachdem das Programmcodepaket vollständig empfangen und in der Prozessoreinrichtung gespeichert ist, wird durch diese selbst ein Prüfsummenwert für das Programmcodepaket errechnet und mit dem zusammen mit dem Programmcodepaket empfangenen Referenz-Prüfsummenwert verglichen und somit verifiziert. Hierdurch kann festgestellt werden, ob das Programmcodepaket integer ist, also fehlerfrei übertragen wurde und/oder nicht manipuliert wurde. Wenn das Programmcodepaket integer ist, startet die Prozessoreinrichtung eine Installationsprozedur, die vorsehen kann, dass ein Update-Flag oder Update-Bit gesetzt ist und die Prozessoreinrichtung dann einen Reset durchführt. Nach dem Reset wird während eines Neustarts durch einen Bootloader die Prozessoreinrichtung gebootet. Der Bootloader erkennt hierbei das gesetzte Update-Flag und startet einen Update Vorgang, der vorsehen kann, dass zumindest ein Teil der Betriebssoftware oder allgemein der vorhandenen Software der Prozessoreinrichtung mittels des Programmcodepakets ersetzt oder ergänzt wird. Dieser Vorgang wird auch als Flashen bezeichnet. Die beschriebene prüfsummenbasierte Verifikation kann dabei alternativ auch im Bootloader selbst erfolgen.

Die aus dem Stand der Technik bekannte Verifikation mittels Prüfsummenwert und die Installationsprozedur können für eine gezielte Manipulation des Geräts genutzt werden, falls es gelingt, im laufenden Betriebssystem den Mechanismus des Vergleichs der Prüfsummenwerte zu manipulieren, um der Prozessoreinrichtung vorzutäuschen, dass der Prüfsummenwert und der Referenz-Prüfsummenwert übereinstimmen, selbst wenn dieses es tatsächlich nicht tun. Dann kann auch ein manipuliertes Programmcodepaket in dem Gerät übertragen werden und dieses manipulierte Programmcodepaket würde dann mittels der Installationsprozedur in dem Gerät installiert.

Das Einspielen eines Programmcodepakets in einem Steuergerät eines Kraftfahrzeugs ist beispielsweise in der DE 10 2016 200 775 A1 beschrieben. Um sich hierbei gegen ein manipuliertes Programmcodepaket zu schützen, ist vorgesehen, mittels eines Steuergeräts mögliche Risiken durch Cyberangriffe für ein Fahrzeug zu erkennen und diese Risiken einer Analyse zu unterziehen, wobei unter anderem ein ungeplantes Beschreiben eines Flash-Speichers einzelner Steuergeräte mit einer neuen Firmware erkannt wird. Nachteilig bei dieser Vorgehensweise ist, dass ein zusätzliches Steuergerät mit einer eigenen, rechenstarken Prozessoreinrichtung notwendig ist, um die Manipulation von Prozessoreinrichtungen anderer Steuergeräte erkennen zu können.

Aus der DE 103 19 365 A1 ist bekannt, innerhalb eines einzelnen Steuergeräts mittels dessen Prozessoreinrichtung eine abgegrenzte Laufzeitumgebung auszuführen, in welcher die Software aus empfangenen Programmcodepaketen ausgeführt werden kann. Hierdurch kann ein eventuell in dem Programmcodepaket enthaltener Schadcode nicht auf andere Teile des Geräts übergreifen. Nachteilig bei dieser Vorgehensweise ist, dass für ein Betriebssystem des Steuergeräts ein Betrieb in einer eigenen Laufzeitumgebung unmöglich ist, sodass kein Schutz für das Betriebssystem selbst besteht.

Aus der DE 10 2014 219 322 A1 ist ein Verfahren für ein Update einer Fahrzeugsteuerung bekannt, bei welchem nach dem Installieren eines Programmcodepakets derjenige Teil eines Steuergeräts, der von der Installation des Programmcodepakets betroffen ist, zunächst von dem übrigen Teil isoliert betrieben wird, um Tests durchzuführen, und erst nach Erkennen einer einwandfreien Installation durch eine Freigabe auch dieser Teil des Steuergeräts wieder genutzt wird. Nachteilig bei dieser Vorgehensweise ist, dass nicht auf die einfache und schnelle Prüfung mittels Prüfsummenwert zurückgegriffen werden kann. Das macht die Installationsprozedur aufwendig.

Die DE 10 2012 220 132 A1 beschreibt ein durch eine Software betreibbares elektronisches Steuergerät und eine Kommunikationseinheit. Zum Zuführen einer Softwareaktualisierung ist die Kommunikationseinheit für einen Datenaustausch mit einem Server eingerichtet und dient zum Autorisieren des Steuergeräts für das Zuführen der Aktualisierungssoftware über einen Datenkanal. Über einen davon getrennten zweiten Datenkanal kann die eigentliche Aktualisierungssoftware empfangen werden.

Die US 2018 / 145 991 A1 beschreibt im Zusammenhang mit einem Softwareupdate die Verwendung eines Prüfsummenwerts, den eine Secure-ECU als verschlüsselten Prüfsummenwert aus einer Update-Datei selbst liest. Der Erfindung liegt die Aufgabe zugrunde, die Manipulation eines Geräts, wie sie durch Schadsoftware verursacht werden kann, zu verhindern.

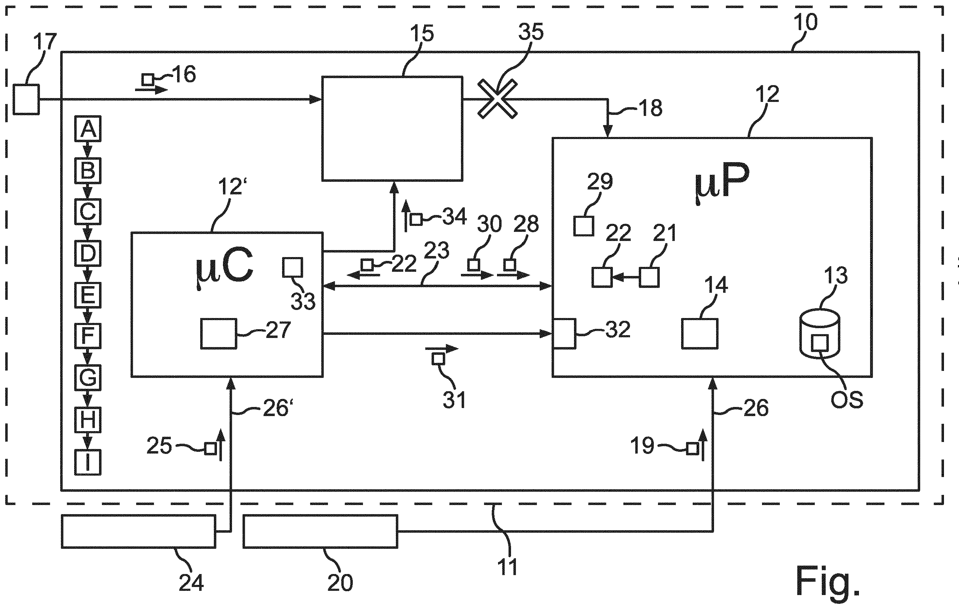

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figur beschrieben.

Die Erfindung stellt ein Verfahren bereit, um ein Programmcodepaket in ein Gerät einzuspielen oder zu installieren. Bei dem Programmcodepaket kann es sich beispielsweise um ein Update oder eine Update-Version für ein Betriebssystem einer Prozessoreinrichtung des Geräts handeln oder um ein neues oder überarbeitetes Anwendungsprogramm für die Prozessoreinrichtung des Geräts. Mit Prozessoreinrichtung ist eine Anordnung aus zumindest einem Mikroprozessor und zugehörigem Datenspeicher zum Speichern von Software für einen Betrieb des Geräts und insbesondere der Prozessoreinrichtung gemeint. Mit Einspielen ist gemeint, dass das Programmcodepaket installiert wird, das heißt für die Ausführung in dem Gerät verfügbar gemacht wird. Das Programmcodepaket kann beispielsweise als Datei oder als Gruppe mehrerer Dateien bereitgestellt sein. Ein bekanntes Format für ein solches Programmcodepaket ist das sogenannte Flashfile, welches verwendet werden kann, um in einem Speicher der Prozessoreinrichtung ein sogenanntes Flashen durchzuführen, das heißt ein Überschreiben des Speicherinhalts mit den Daten des Programmcodepakets. Für die Installation empfängt zunächst die besagte Prozessoreinrichtung des Geräts das Programmcodepaket über eine Datenverbindung aus einer geräteexternen Datenquelle. Die Datenverbindung wird hier als erste Datenverbindung bezeichnet, da im Weiteren noch eine zweite Datenverbindung beschrieben werden wird. Die geräteexterne Datenquelle kann beispielsweise ein Server des Internets oder ein weiteres, mit dem Gerät verbundenes anderes Gerät sein. Wie aus dem Stand der Technik bekannt, wird bei dem Verfahren durch die Prozessoreinrichtung zu dem empfangenen Programmcodepaket ein Prüfsummenwert gebildet. Algorithmen zum Bilden eines Prüfsummenwerts sind an sich aus dem Stand der Technik bekannt. Ein Prüfsummenwert kann beispielsweise ein sogenannter HASH-Wert sein. Ein möglicher Algorithmus zum Bilden des Prüfsummenwerts ist der Algorithmus SHA1.

Anhand des Prüfsummenwerts kann erkannt werden, ob der Inhalt des Programmcodepakets manipuliert wurde. Hierzu ist der "richtige" Prüfsummenwert, d.h. der Referenz-Prüfsummenwert, als Vergleich notwendig. Wird der gerade gebildete Prüfsummenwert allerdings in der eingangs beschriebenen Weise durch die Prozessoreinrichtung selbst mit dem Referenz-Prüfsummenwert verglichen, so kann dieser Vergleichsvorgang oder diese Vergleichsprozedur durch einen Hacker manipuliert werden, um eine Manipulation des Programmcodepakets zu vertuschen. Die Erfindung sieht deshalb vor, dass in dem Gerät eine von der Prozessoreinrichtung verschiedene Steuereinrichtung betrieben wird und durch die Steuereinrichtung aus einer vorbestimmten geräteexternen Update-Servereinrichtung über eine von der ersten Datenverbindung verschiedene zweite Datenverbindung der Referenz-Prüfsummenwert empfangen wird. Die Updaten-Servereinrichtung kann beispielsweise durch einen Server des Internets oder durch ein von dem Gerät verschiedenem Gerät gebildet sein. Die Update-Servereinrichtung kann beispielsweise von einem Hersteller des Programmcodepakets betrieben werden.

Die Steuereinrichtung ist also unabhängig von der Prozessoreinrichtung was das Durchführen einer Berechnung oder eines Vergleichs angeht. Mit dem Empfang des Referenz-Prüfsummenwerts ist in der Steuereinrichtung der "richtige" Prüfsummenwert bekannt, also derjenige Referenz-Prüfsummenwert, der sich für das Programmcodepaket im unmanipulierten Zustand ergeben muss. Der unmanipulierte Zustand kann beispielsweise dann sichergestellt sein, wenn sich das Programmcodepaket noch beim Hersteller des Programmcodepakets befindet. Durch die Steuereinrichtung wird nun zusätzlich aus der Prozessoreinrichtung der von dieser gebildete Prüfsummenwert empfangen. Damit kann also nun der Vergleich zwischen diesem Prüfsummenwert und dem Referenz-Prüfsummenwert unabhängig oder getrennt von der Prozessoreinrichtung durch die Steuereinrichtung durchgeführt werden. Damit kann der Vergleich nicht durch eine Schadsoftware manipuliert werden, die beispielsweise bereits in der Prozessoreinrichtung installiert worden sein könnte.

Nur für den Fall, dass der Prüfsummenwert und der Referenz-Prüfsummenwert gleich sind, wird dann durch die Steuereinrichtung in der Prozessoreinrichtung eine vorbestimmte Installationsprozedur zum Installieren des Programmcodepakets in der Prozessoreinrichtung ausgelöst. Mit anderen Worten liegt die Entscheidung darüber, ob das Programmcodepaket in der Prozessoreinrichtung des Geräts tatsächlich installiert wird, also eingespielt wird, bei der Steuereinrichtung und nicht bei der Prozessoreinrichtung selbst.

Durch die Erfindung ergibt sich der Vorteil, dass selbst für den Fall, dass in einer Prozessoreinrichtung bereits durch Schadsoftware deren Betrieb manipuliert ist und somit beispielsweise der Vergleich von Prüfsummenwerten beeinflusst werden kann, dies nicht ermöglicht, ein weiteres, manipuliertes Programmcodepaket nach zu installieren, da für diese Installation der Vergleich des Prüfsummenwerts des Programmcodepakets mit einem Referenz-Prüfsummenwert außerhalb der Prozessoreinrichtung durch eine unabhängige Steuereinrichtung durchgeführt wird. Ein Hacker, der also Kontrolle über die Prozessoreinrichtung erlangt und nun ein weiteres Programmcodepaket mit weiterem Schadcode installieren wollte, könnte dies nicht tun, wenn er keine Kontrolle über die Steuereinrichtung erhält. Da man die Steuereinrichtung beispielsweise auf Basis von Programmcodes in einem nur-lesbaren Speicher (ROM - Read Only Memory) bilden kann, ist dann eine solche Manipulation gar nicht möglich.

Gemäß der Erfindung umfasst die Installationsprozedur, dass durch die Steuereinrichtung ein Reset der Prozessoreinrichtung von außerhalb der Steuereinrichtung nach einer vorbestimmten Zeitdauer erzwungen wird. Die Zeitdauer kann bemessen sein beispielsweise ab dem Feststellen, dass der Prüfsummenwert und der Referenz-Prüfsummenwert gleich sind, oder ab dem Aussenden oder Erzeugen eines Freigabesignals. Durch den Reset wird der Betrieb der Prozessoreinrichtung unterbrochen oder abgebrochen und die Prozessoreinrichtung wird in der beschriebenen Weise zurückgesetzt, das heißt sie beginnt einen Reboot. Durch das Erzwingen des Resets nach der vorbestimmen Zeitdauer ist sichergestellt, dass für den Fall, dass das Programmcodepaket einen Prüfsummenwert aufweist, der mit dem Referenz-Prüfsummenwert übereinstimmt, dann auch sichergestellt ist, dass dieses Programmcodepaket tatsächlich installiert wird, indem die auf der Prozessoreinrichtung bereits laufende Softwaren im Betrieb durch den Reset unterbrochen wird. Hierdurch ist in vorteilhafter Weise verhindert, dass eine bereits manipulierte Prozessoreinrichtung ein Update (Installation eines Programmcodepakets) verhindert, indem sie den Reset blockiert. Das Erzwingen des Resets kann durch die Steuereinrichtung mittels eines Reset-Signals an einen Reset-Pin der Prozessoreinrichtung erfolgen.

Gemäß der Erfindung wird dagegen zum Erzwingen des besagten Resets durch die Steuereinrichtung eine elektrische Versorgungseinrichtung, durch welche die Prozessoreinrichtung mit elektrischer Energie versorgt wird, zum Unterbrechen der Energiezufuhr für die Prozessoreinrichtung angesteuert. Mit anderen Worten wird also der erzwungene Reset nicht einmal von der Prozessoreinrichtung selbst gefordert oder erzwungen, sondern die Steuereinrichtung signalisiert an die elektrische Versorgungseinrichtung, die sich außerhalb der Prozessoreinrichtung befindet, dass die Energiezufuhr für die Prozessoreinrichtung zu unterbrechen ist. Damit wird die Prozessoreinrichtung zuverlässig angehalten oder im Betrieb unterbrochen. Denn eine Unterbrechung der Energiezufuhr, also beispielsweise der Spannungsversorgung, führt bei einer Prozessoreinrichtung zu dem besagten Reset. Indem die Versorgungseinrichtung angesteuert wird, kann Schadcode auf der Prozessoreinrichtung keinen Einfluss auf diesen erzwungenen Reset nehmen.

Die Erfindung umfasst auch Ausführungsformen, durch die sich zusätzliche Vorteile ergeben.

In einer Ausführungsform umfasst das beschriebene Auslösen der Installationsprozedur, wie es durch die Steuereinrichtung geschieht, dass durch die Steuereinrichtung ein Freigabesignal an die Prozessoreinrichtung ausgesendet wird. Durch die Prozessoreinrichtung wird dann bei Empfangen des Freigabesignals ein Neustart der Prozessoreinrichtung ausgelöst. Ein Neustart umfasst zum einen den Reset (Zurücksetzen), das heißt das Beenden des Betriebs der Prozessoreinrichtung und das Zurücksetzen des Betriebszustands oder Programmzählers der Prozessoreinrichtung, und zum anderen den Reboot (Neuanlauf), also die erneute Aufnahme des Betriebs durch die Prozessoreinrichtung im Anschluss an den Reset. Indem der Neustart durch die Prozessoreinrichtung selbst ausgelöst wird, ergibt sich der Vorteil, dass die Prozessoreinrichtung ein Rechenergebnis und/oder einen Bearbeitungszustand einer Aufgabe (Task) abspeichern kann, bevor der Neustart durchgeführt wird. Hierdurch wird ein Datenverlust vermieden. Das Freigabesignal kann eine digitale Nachricht sein, die über eine digitale Kommunikationsschnittstelle (z.B. 12C-Bus) übertragen werden kann, oder ein Spannungssignal, das an einem Eingangsport oder einem Eingangsanschluss der Prozessoreinrichtung als konstantes, diskretes analoges Signal angelegt wird.

In einer Ausführungsform umfasst die besagte Installationsprozedur, die im Falle eines Programmcodepakets mit korrektem Prüfsummenwert ausgelöst wird, dass durch die Steuereinrichtung an einem elektrischen Signaleingang der Prozessoreinrichtung während des Neustarts der Prozessoreinrichtung, insbesondere während des Reboots ein elektrisches Signal, insbesondere ein in dieser Zeit konstanter elektrischer Spannungspegel, eingestellt wird. Mit anderen Worten wird also durch die Steuereinrichtung an einem Signaleingang, beispielsweise einem GPIO-Port (GPIO - General Purpose Input Output) ein elektrisches Signal erzeugt, das dann von innerhalb der Prozessoreinrichtung eingelesen oder interpretiert werden kann. Entsprechend wird durch einen Bootloader der Prozessoreinrichtung für den Fall, dass während des Neustarts, insbesondere während des Reboots, das Signal am Signaleingang anliegt, eine Betriebssoftware der Prozessoreinrichtung durch das Programmcodepaket ersetzt. Ein Bootloader ist ein Programm, welches während eines Neustarts der Prozessoreinrichtung ausgeführt wird und welches das eigentliche Betriebssystem der Prozessoreinrichtung in einen RAM (Random Acces Memory) der Prozessoreinrichtung kopiert oder lädt und dann die Kontrolle über die Prozessoreinrichtung an dieses Betriebssystem übergibt oder abgibt. Der Bootloader der Prozessoreinrichtung weist aber des Weiteren auch eine Installationsroutine auf, die dafür sorgt, dass das Betriebssystem oder die Betriebssoftware der Prozessoreinrichtung im Datenspeicher der Prozessoreinrichtung mit dem Programmcodepaket überschrieben wird oder durch das Programmcodepaket ersetzt wird. Diese Installationsroutine wird mittels des Signals am Signaleingang durch die Steuereinrichtung ausgelöst. Somit ist also sichergestellt, dass selbst dann, wenn das bisher vorhandene Betriebssystem oder die bisher vorhandene Betriebssoftware der Prozessoreinrichtung manipuliert ist, die Steuereinrichtung durch Setzen des Signals sicherstellen kann, dass diese manipulierte Betriebssoftware durch das Programmcodepaket ersetzt wird. Da dies während des Reboots durch den Bootloader geschieht, kann die manipulierte Betriebssoftware der Prozessoreinrichtung selbst keinen Einfluss auf diesen Vorgang nehmen. Damit ist zuverlässig ein Update oder ein Ersatz der Betriebssoftware auf Grundlage des Programmcodepakets ermöglicht.

In einer Ausführungsform ist die Steuereinrichtung mit einem Betriebssystem betrieben, das von einem Betriebssystem der Prozessoreinrichtung verschieden ist. Mit anderen Worten beruhen die beiden Betriebssysteme auf unterschiedlichen Technologien oder Implementierungen. Beispielsweise kann ein Betriebssystem eines der folgenden sein: Linux, Windows, QNX, ein Posix basiertes Betriebssystem. Hierdurch ergib sich der Vorteil, dass ein Schadcode (also Software für eine Manipulation), der für das Betriebssystem der Prozessoreinrichtung eingerichtet ist, nicht dafür verwendet werden kann oder unwirksam ist, wenn es um die Manipulation der Steuereinrichtung geht. Ein Hacker müsste somit zwei unterschiedlich geartete Manipulationsversuche erfolgreich durchführen, anstelle nur einem Manipulationsversuch, um den durch das Verfahren gebildeten Schutz vor Schadsoftware zu umgehen.

In einer Ausführungsform wird die Steuereinrichtung durch einen Mikrocontroller bereitgestellt. Ein solcher Mikrocontroller kann festprogrammiert sein, also eine nicht-veränderbare Betriebssoftware aufweisen, die beispielsweise in einem ROM gespeichert sein kann. Des Weiteren ist ein Mikrocontroller mit weniger elektrischer Leistung betreibbar als eine Prozessoreinrichtung, mit zumindest einem Mikroprozessor aufweist.

Die Erfindung umfasst auch ein Gerät, das durch das beschriebene Verfahren geschützt ist. Das Gerät weist eine Prozessoreinrichtung und eine zusätzliche Steuereinrichtung der beschriebenen Art auf. Das Gerät ist insgesamt dazu eingerichtet, eine Ausführungsform des erfindungsgemäßen Verfahrens durchzuführen. Das Gerät kann also mit der Prozessoreinrichtung zumindest einen Mikroprozessor aufweisen sowie einen Datenspeicher für eine Betriebssoftware und zumindest eine Anwendungssoftware, die durch den zumindest einen Mikroprozessor ausgeführt werden können. Des Weiteren ist zum Schutz der Prozessoreinrichtung bei der Installation eines Programmcodepakets die zusätzliche Steuereinrichtung vorgesehen, die in der beschriebenen Weise beispielsweise auf der Grundlage eines Mikrocontrollers realisiert oder bereitgestellt sein kann.

In einer Ausführungsform ist das Gerät ein Steuergerät für ein Kraftfahrzeug. Somit kann also das Kraftfahrzeug davor geschützt werden, dass in dessen Steuergerät manipulierte Software oder Schadsoftware installiert wird. In einer Ausführungsform ist das Gerät ein mobiles Endgerät. Ein solches mobiles Endgerät kann beispielsweise ein Smartphone oder ein Tablet-PC oder eine Smartwatch sein. In einer Ausführungsform ist das Gerät eine stationäre Recheneinrichtung, also beispielsweise ein Arbeitsplatz PC (PC - Personal Computer) oder ein Server oder ein Cloud Computer.

Im Zusammenhang mit der Ausgestaltung des Geräts als Steuergerät umfasst die Erfindung auch ein Kraftfahrzeug mit einem solchen Gerät, das in dem Kraftfahrzeug bereitgestellt ist. Somit ist das Kraftfahrzeug gegen einen Einfluss durch Schadsoftware geschützt. Das erfindungsgemäße Kraftfahrzeug ist bevorzugt als Kraftwagen, insbesondere als Personenkraftwagen oder Lastkraftwagen, ausgestaltet.

Im Folgenden sind Ausführungsbeispiele der Erfindung beschrieben. Hierzu zeigt die einzige Figur:
- Fig.: eine schematische Darstellung einer Ausführungsform des erfindungsgemäßen Geräts, indem eine Ausführungsform des erfindungsgemäßen Verfahrens durchgeführt werden kann.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In der Figur bezeichnen gleiche Bezugszeichen jeweils funktionsgleiche Elemente.

Die Figur zeigt ein Gerät 10, bei dem es sich beispielsweise um ein elektronisches Steuergerät (ECU - Electronic Controll Unit) handeln kann, das in einem Kraftfahrzeug 11 bereitgestellt sein kann. Das Gerät 10 kann aber auch beispielsweise ein mobiles Endgerät sein, das ein Benutzer mit sich führen kann, oder eine stationäre Recheneinrichtung, die beispielsweise in einem Büro als Arbeitsplatzrechner vorgesehen sein kann, oder eine stationäre Servereinrichtung, die als ein Servercomputer, beispielsweise in einem Rechenzentrum, betrieben werden kann. Im Folgenden sei der Anschaulichkeit halber angenommen, dass es sich bei dem Gerät 10 um ein elektronisches Steuergerät für ein Kraftfahrzeug 11 handelt. Die Ausführungen gelten aber entsprechend auch für andere Ausgestaltungen des Geräts 10.

In dem Gerät 10 kann eine Prozessoreinrichtung 12 bereitgestellt sein, die zumindest einen Mikroprozessor aufweisen kann, weshalb die Prozessoreinrichtung 12 im Folgenden auch als Mikroprozessor µP bezeichnet ist. Die Prozessoreinrichtung 12 kann des Weiteren einen Datenspeicher 13 aufweisen, in welchem eine Betriebssoftware OS (Betriebssystem) und/oder zumindest eine Applikationssoftware für die Prozessoreinrichtung 12 gespeichert sein kann. Für einen Start oder einen Bootup oder Bootprozess der Prozessoreinrichtung 12 kann diese einen Bootloader 14 aufweisen.

In dem Gerät 10 kann eine elektrische Versorgungseinrichtung 15 für die Prozessoreinrichtung 12 bereitgestellt sein. Eine solche Versorgungseinrichtung 15 kann beispielsweise als ein Netzteil des Geräts 10 ausgestaltet sein. Die Versorgungseinrichtung 15 kann beispielsweise elektrische Energie 16 aus einem geräteexternen elektrischen Netzwerk 17 empfangen und eine Energiezufuhr 18 der elektrischen Energie 16 für die Prozessoreinrichtung 12 steuern oder festlegen. Das Netzwerk 17 kann im Falle eines Kraftfahrzeugs 11 beispielsweise das elektrische Bordnetz des Kraftfahrzeugs 11 sein.

In der Figur ist gezeigt, dass das Gerät 10 des Weiteren eine von der Prozessoreinrichtung 12 unabhängig betreibbare Steuereinrichtung 12' aufweisen kann, die beispielsweise auf der Grundlage eines Mikrocontrollers gebildet sein kann. Im Folgenden ist daher die Steuereinrichtung 12' auch als Mikroprozessor µC bezeichnet.

In dem dargestellten Beispiel kann es notwendig sein, dass die Betriebssoftware OS erneuert werden muss, das heißt ein Update der Betriebssoftware durchgeführt werden soll. Hierzu kann die neue Betriebssoftware als Programmcodepaket 19 über eine erste Datenverbindung 26 zu der Prozessoreinrichtung 12 übertragen werden. Die Prozessoreinrichtung 12 kann das Programmcodepaket 19 beispielsweise aus einer geräteexternen Datenquelle 20 empfangen, von der in der Prozessoreinrichtung 12 aber nicht bekannt ist, wie vertrauenswürdig sie ist, was bedeutet, dass nicht bekannt ist, ob das Programmcodepaket 19 tatsächlich die vom Hersteller oder Betreiber der Betriebssoftware OS vorgesehenen Funktionalitäten enthält oder ob es sich um ein manipuliertes Programmcodepaket handelt, welches Schadsoftware oder Schadcode enthalten könnte. Deshalb kann vorgesehen sein, dass mittels eines Algorithmus 21 für eine Prüfsumme, beispielsweise eines HASH-Algorithmus, zu dem empfangenen Programmcodepaket 19 ein Prüfsummenwert 22, also beispielsweise ein HASH-Wert, berechnet wird.

Die Verifizierung oder Überprüfung dieses Prüfsummenwerts 22 wird aber bei dem Gerät 10 nicht durch die Prozessoreinrichtung 12 selbst durchgeführt, sodass auch für den Fall, dass die Prozessoreinrichtung 12 bereits manipuliert ist und eine solche Verifikation des Prüfsummenwerts 22 beeinträchtigt sein könnte, dies für einen Hacker unmöglich ist, weil die Überprüfung außerhalb der Prozessoreinrichtung 12 stattfindet. Über eine Kommunikationsschnittstelle 23 kann der berechnete Prüfsummenwert 22 hierzu an die Steuereinrichtung 12' übertragen werden. Die Kommunikationsschnittstelle 23 kann beispielsweise auf der Grundlage einer digitalen Datenverbindung, beispielsweise einer seriellen Datenverbindung oder einer parallelen Datenverbindung, beispielsweise einem Datenbus, erfolgen. Für den Vergleich kann die Steuereinrichtung 12' aus einer Update-Servereinrichtung 24 einen Referenz-Prüfsummenwert 25 über eine zweite Datenverbindung 26' empfangen. Die Update-Servereinrichtung 24 kann beispielsweise durch den Betreiber oder Hersteller der Betriebssoftware OS bereitgestellt sein. Es kann sich beispielsweise um einen Server des Internets handeln. Die zweite Datenverbindung 26', die zwischen der Update-Servereinrichtung 24 und der Steuereinrichtung 12' betrieben oder aufgebaut wird, kann eine Ende-zu-Ende-Verschlüsselung aufweisen, wie sie beispielsweise auf der Grundlage eines Public-Key-Verschlüsselungsverfahrens in an sich bekannter Weise bereitgestellt werden kann. Es kann beispielsweise auf einen TLS-Protokoll (TLS - Transport Layer Security) zurückgegriffen werden. Die zweite Datenverbindung 26' ist insbesondere eine von der ersten Datenverbindung 26 verschiedene Datenverbindung, das heißt das Programmcodepaket 19 wird über eine erste Datenverbindung 26 getrennt von dem Referenz-Prüfsummenwert 25 übertragen, welcher über die zweite Datenverbindung 26' übertragen wird. Beide Datenverbindungen 26, 26' können jeweils z.B. auf einer Kommunikationsverbindung über das Internet beruhen und/oder auf einer fahrzeuginternen Buskommunikation, wie bereits beschrieben wurde. Durch die Steuereinrichtung 12' kann mittels einer Vergleichsprozedur 27 ein Vergleich zwischen dem berechneten Prüfsummenwert 22 der Prozessoreinrichtung 12 und dem Referenz-Prüfsummenwert 25 durchgeführt werden. Sind die beiden Prüfsummenwerte 22, 25 identisch, so kann durch die Steuereinrichtung 12' beispielsweise über die Kommunikationsschnittstelle 23 ein Freigabesignal 28 an die Prozessoreinrichtung 12 ausgesendet werden. Das Freigabesignal 28 kann der Prozessoreinrichtung 12 signalisieren, dass das von ihr empfangene Programmcodepaket 19 korrekt oder in Ordnung oder valide ist. Daraufhin kann die Prozessoreinrichtung 12 eine Installationsprozedur 29 starten, die darin bestehen kann, dass beispielsweise zunächst aktuelle Programmzustände oder Berechnungszustände in dem Datenspeicher 13 oder in einem anderen Datenspeicher gespeichert werden können und dann ein Reset der Prozessoreinrichtung 12 ausgelöst wird. Sind dagegen die beiden Prüfsummenwerte 22, 25 ungleich, so kann anstelle des Freigabesignals 28 durch die Steuereinrichtung 12' ein Warnsignal 30 an die Prozessoreinrichtung 12 ausgesendet werden. Das Warnsignal 30 kann der Prozessoreinrichtung 12 signalisieren, dass ein Manipulationsversuch vorliegt. Es kann dann eine entsprechende Abwehrmaßnahme eingeleitet werden durch die Prozessoreinrichtung 12, wobei eine an sich aus dem Stand der Technik bekannte Abwehrmaßnahme vorgesehen sein kann.

Nach dem Reset kann die Prozessoreinrichtung 12 mittels des Bootloaders 14 neu starten. Die Steuereinrichtung 12' kann mittels eines elektrischen Signals 31, das die Steuereinrichtung 12' an einem elektrischen Signaleingang 32 der Prozessoreinrichtung 12 anlegen kann, signalisieren, dass der Bootloader 14 nicht die bereits in dem Datenspeicher 13 gespeicherte bisherige Betriebssoftware OS starten soll, sondern zunächst diese durch die Software im Programmcodepaket 19 ersetzen soll und dann die so neu installierte Betriebssoftware OS starten soll. Der Bootloader 14 kann dies immer dann durchführen, wenn das Signal 31 am Signaleingang 32 anliegt.

Um sicherzustellen, dass der Reset der Prozessoreinrichtung 12 nicht durch einen bereits erfolgten Hackerangriff oder eine bereits erfolgte Manipulation der Prozessoreinrichtung 12 verhindert wird, kann durch die Steuereinrichtung 12' vorgesehen sein, dass nach Aussenden des Freigabesignals 28 nach einem vorbestimmten Zeitintervall 33 an die elektrische Versorgungseinrichtung 15 ein Unterbrechungssignal 34 ausgesendet wird. Die Versorgungseinrichtung 15 kann bei Empfangen des Unterbrechungssignals 34 die Energiezufuhr 18 für eine vorbestimmte Zeitdauer, beispielsweise für eine Zeitdauer kleiner als eine Minute, insbesondere kleiner als zehn Sekunden, mittels einer Unterbrechung 35 unterbrechen, wodurch der Reset der Prozessoreinrichtung 12 von außerhalb derselben erzwungen wird.

Im Folgenden ist eine besonders bevorzugte Ausführungsform beschrieben, bei welcher vorgesehen ist, dass als Programmcodepaket ein sogenanntes Flashfile zum Überschreiben einer Betriebssoftware der Prozessoreinrichtung bereitgestellt wird.

Die finale Überprüfung und Freigabe eines Updates (Programmcodepaket) des µP (Prozessoreinrichtung 12) wird nicht durch den µP selbst durchgeführt sondern durch einen zusätzlichen kleinen µC (Steuereinrichtung 12'). Der µC wird hierbei als "Trusted Area" (vertrauenswürdiger Bereich) angesehen und er entscheidet final über die Freigabe des Updates. Nicht der zu aktualisierende Teil eines Steuergerätes (der als untrusted Area gilt, d.h. als misstrauenswürdiger Bereich) ist verantwortlich für die Entscheidung des Updates, sondern die sichere Seite. Damit wird verhindert, dass auf einen komprimierten µP Fremdsoftware aufgespielt werden kann. Die Erhöhung der Sicherheit durch zusätzliche Sicherheitshürde ist die Folge.

Ein einfacher Angriff auf den µP ist nicht mehr ausreichend, um auf die ECU schadhafte SW (Software) aufzuspielen. D.h. es ergibt sich eine Erhöhung der Sicherheitsmechanismen. Ein mögliche schadhafte SW auf dem µP könnte aber trotzdem neu programmiert werden.

Auf dem µC wird daher bevorzugt ein nicht frei zugängliches Embedded-Betriebssystem verwendet, welches insbesondere komplett unterschiedlich zu dem Betriebssystem auf dem µP ist. Der µC kann als Trusted Area angesehen werden, da SW für Dritte nicht frei verfügbar und nur in Händen von vorbestimmten Programmierern (d.h. z.B. dem OEM - Original Equipment Manufacturer).

Über das Flashfile (Programmcodepaket) wird von der bereitstellenden Instanz oder Update-Servereinrichtung ein HASH-Wert als Referenz-Prüfsummenwert berechnet. Dieser HASH-Wert wird nicht an das Flashfile angehängt, sondern Ende zu Ende verschlüsselt gesondert nur an den µC versendet. Das Flashfile selbst wird an den µP gesendet. Die Berechnung des HASH-Wertes über das Flashfiles erfolgt weiterhin auf dem µP, da nur er die Rechenleistung besitzt große Flashfiles zu verarbeiten. µP stellt errechneten HASH-Wert als berechneten Prüfsummenwert dem µC z.B. via internem Communication Interface bereit.

Die Verifikation oder der Vergleich der HASH-Werte erfolgt auf dem µC. Nach gültiger Verifikation gibt µC das Update frei und teilt dem µP die Updatefreigabe über das interne Communication Interface mit. Der µC gibt dem µP Zeit seine Filesysteme zu schließen und herunter zufahren. Nach Ablauf der vorbestimmten Zeitdauer schaltet der µC aktiv die Power Supply (Energiezufuhr) des µP ab. Falls Schadsoftware auf dem µP ein Herunterfahren verhindern würde, wird der µP trotzdem durch das An- und Abschalten der Power Supply in den Betrieb des Bootloaders 14 gezwungen.

Gleichzeitig setzt der µC den Updatefreigabe-GPIO auf HIGH. Beim Aufstart oder Booten des µP wird der Bootloader 14 gestartet. Dieser liest den Updatefreigabe-GPIO ein und startet darauf das Update. Ohne anliegenden Updatefreigabe-GPIO würde der Bootloader die Standard Bootroutine durchlaufen.

Somit kann sich insgesamt in dem Gerät 10 der folgende Ablauf der Installation des Programmcodepakets ergeben:
A) Flashfile ohne HASH-Wert wird auf den µP übertragen.
B) HASH-Wert wird verschlüsselt auf µC übertragen.
C) µP errechnet HASH-Wert über Flashfile.
D) µP teilt HASH-Wert dem µC mit.
E) µC vergleicht errechneten mit erhaltenen HASH-Wert und gibt daraufhin Update frei.
F) µC teilt µP Freigabe für Update mit und fordert ihn auf neu zu starten und in den Bootloader zu wechseln.
G) Damit µP sicher in Bootloader wechselt (falls er kompromittiert wäre und nicht neustartet), schaltet µC die Stromversorgung des µP aus und wieder an, somit startet der µP sicher neu.
H) µC schaltet gleichzeitig den Updatefreigabe-GPIO, um µP-Bootloader Updatemode mitzuteilen.
I) µP liest im Bootloader den Updatefreigabe-GPIO ein und wechselt in den Updatemode und führt Update durch.

Insgesamt zeigen die Beispiele, wie durch die Erfindung ein sicherer Updatemechanismus für einen Mikroprozessor durch eine zusätzliche Mikrocontroller-Sicherheitsebene bereitgestellt werden kann.

## Patentansprüche

1. Verfahren zum Installieren eines Programmcodepakets (19) in ein Gerät (10), wobei eine Prozessoreinrichtung (12) des Geräts (10) das Programmcodepaket (19) über eine erste Datenverbindung (26) aus einer geräteexternen Datenquelle (20) empfängt und zu dem empfangenen Programmcodepaket (19) einen Prüfsummenwert (22) bildet, wobei in dem Gerät (10) eine von der Prozessoreinrichtung (12) verschiedene Steuereinrichtung (12') betrieben wird und durch die Steuereinrichtung (12') aus einer vorbestimmten geräteexternen Update-Servereinrichtung (24) über eine von der ersten Datenverbindung (26) verschiedene zweite Datenverbindung (26') ein Referenz-Prüfsummenwert (25) empfangen wird und aus der Prozessoreinrichtung (12) der von dieser gebildete Prüfsummenwert (22) empfangen wird, und wobei
nur für den Fall, dass der Prüfsummenwert (22) und der Referenz-Prüfsummenwert (25) gleich sind, durch die Steuereinrichtung (12') in der Prozessoreinrichtung (12) eine vorbestimmte Installationsprozedur (29) zum Installieren des Programmcodepakets (19) in der Prozessoreinrichtung (12) ausgelöst wird, wodurch die Entscheidung darüber, ob das Programmcodepaket (19) in der Prozessoreinrichtung (12) des Geräts (10) tatsächlich installiert wird, bei der Steuereinrichtung (12') und nicht bei der Prozessoreinrichtung (12) selbst liegt, wobei die Installationsprozedur (29) umfasst, dass durch die Steuereinrichtung (12') ein Reset der Prozessoreinrichtung (12) von außerhalb der Prozessoreinrichtung (12) nach einer vorbestimmten Zeitdauer (33) erzwungen wird, wobei zum Erzwingen des Resets durch die Steuereinrichtung (12') eine elektrische Versorgungseinrichtung (15), durch welche die Prozessoreinrichtung (12) mit elektrischer Energie (16) versorgt wird, zum Unterbrechen (35) einer Energiezufuhr (18) für die Prozessoreinrichtung (12) angesteuert wird.

2. Verfahren nach Anspruch 1, wobei das Auslösen der Installationsprozedur (29) umfasst, dass durch die Steuereinrichtung (12') ein Freigabesignal (28) an die Prozessoreinrichtung (12) ausgesendet wird und durch die Prozessoreinrichtung (12) bei Empfangen des Freigabesignals (28) ein Neustart der Prozessoreinrichtung (12) ausgelöst wird.

3. Verfahren nach einem der vorherigen Ansprüche, wobei die Installationsprozedur (29) vorsieht, dass durch die Steuereinrichtung (12') an einem elektrischen Signaleingang (32) der Prozessoreinrichtung (12) während des Neustarts der Prozessoreinrichtung (12) ein elektrisches Signal (31) eingestellt wird und durch einen Bootloader (14) der Prozessoreinrichtung (12) für den Fall, dass während des Neustarts das Signal (31) am Signaleingang (32) anliegt, eine Betriebssoftware (OS) der Prozessoreinrichtung (12) durch das Programmcodepaket (19) ersetzt wird.

4. Verfahren nach einem der vorhergehenden Ansprüche, wobei die Steuereinrichtung (12') mit einem Betriebssystem betrieben wird, das von einem Betriebssystem (OS) der Prozessoreinrichtung (12) verschieden ist.

5. Verfahren nach einem der vorhergehenden Ansprüche, wobei die Steuereinrichtung (12') durch einen Mikrocontroller (µC) bereitgestellt wird.

6. Gerät (10) mit einer Prozessoreinrichtung (12) und mit einer zusätzlichen Steuereinrichtung (12'), wobei das Gerät (10) dazu eingerichtet ist, ein Verfahren nach einem der vorhergehenden Ansprüche durchzuführen.

7. Gerät (10) nach Anspruch 6, wobei das Gerät (10) als ein Steuergerät für ein Kraftfahrzeug (11) oder als ein mobiles Endgerät oder eine stationäre Recheneinrichtung ausgestaltet ist.

8. Kraftfahrzeug (11) mit einem Gerät (10) nach Anspruch 6 oder 7.

## Claims

1. Method for installing a program code packet (19) onto a device (10), wherein a processor apparatus (12) of the device (10) receives the program code packet (19) via a first data connection (26) from a device-external data source (20) and forms a checksum value (22) in response to the received program code packet (19), wherein a control apparatus (12') that differs from the processor apparatus (12) is operated in the device (10) and the control apparatus (12') receives a reference checksum value (25) from a specified device-external update server apparatus (24) via a second data connection (26') that differs from the first data connection (26) and the checksum value (22) formed by the processor apparatus (12) from the same, and wherein,
a specified installation procedure (29) for installing the program code packet (19) on the processor apparatus (12) is initiated by the control apparatus (12') in the processor apparatus (12) only in the event that the checksum value (22) and the reference checksum value (25) are identical, whereby the decision on whether the program code packet (19) is actually installed on the processor apparatus (12) of the device (10) is made by the control apparatus (12') and not by the processor apparatus (12), wherein the installation procedure (29) comprises a forced reset of the processor apparatus (12) from outside the processor apparatus (12) by the control apparatus (12') after a specified duration (33), wherein, to force the reset by the control apparatus (12'), an electric power supply apparatus (15), by means of which the processor apparatus (12) is supplied with electrical energy (16), is actuated to interrupt (35) an energy supply (18) for the processor apparatus (12).

2. Method according to claim 1, wherein the triggering of the installation procedure (29) comprises an enable signal (28) being transmitted to the processor apparatus (12) by the control apparatus (12') and a reset of the processor apparatus (12) being triggered by the processor apparatus (12) on receipt of the enable signal (28).

3. Method according to any of the preceding claims, wherein the installation procedure (29) provides for an electrical signal (31) to be adjusted by the control apparatus (12') at an electrical signal input (32) of the processor apparatus (12) during the reset of the processor apparatus (12) and by a bootloader (14) of the processor apparatus (12) in the event that, during the reset, the signal (31) remains constant at the signal input (32), an operating software (OS) of the processor apparatus (12) is replaced by the program code packet (19).

4. Method according to any of the preceding claims, wherein the control apparatus (12') is operated with an operating system, which differs from an operating system (OS) of the processor apparatus (12).

5. Method according to any of the preceding claims, wherein the control apparatus (12') is provided by a microcontroller (µC).

6. Device (10) having a processor apparatus (12) and having an additional control apparatus (12'), wherein the device (10) is designed to implement a method according to any of the preceding claims.

7. Device (10) according to claim 6, wherein the device (10) is configured as a control device for a motor vehicle (11) or as a mobile terminal or a stationary computing apparatus.

8. Motor vehicle (11) having a device (10) according to claim 6 or 7.

## Revendications

1. Procédé pour l'installation d'un paquet de code de programme (19) dans un appareil (10), dans lequel un dispositif à processeur (12) de l'appareil (10) reçoit le paquet de code de programme (19) par le biais d'une première connexion de données (26) à partir d'une source de données (20) externe à l'appareil et forme une valeur de somme de contrôle (22) pour le paquet de code de programme (19) reçu, dans lequel
dans l'appareil (10) un dispositif de commande (12') différent du dispositif à processeur (12) est actionné et une valeur de somme de contrôle de référence (25) est reçue par le dispositif de commande (12') à partir d'un dispositif serveur de mise à jour (24) prédéterminé externe à l'appareil par le biais d'une seconde connexion de données (26') différente de la première connexion de données (26) et à partir du dispositif à processeur (12) la valeur de somme de contrôle (22) formée par celui-ci est reçue, et dans lequel, uniquement dans le cas où la valeur de somme de contrôle (22) et la valeur de somme de contrôle de référence (25) sont identiques, une procédure d'installation prédéterminée (29) pour l'installation du paquet de code de programme (19) dans le dispositif à processeur (12) est déclenchée par le dispositif de commande (12') dans le dispositif à processeur (12), de ce fait la décision concernant l'installation effective ou non du paquet de code de programme (19) dans le dispositif à processeur (12) de l'appareil (10) incombe au dispositif de commande (12') et non au dispositif à processeur lui-même, dans lequel la procédure d'installation (29) comprend le fait que par le dispositif de commande (12'), une réinitialisation du dispositif à processeur (12) est imposée de l'extérieur du dispositif à processeur (12) après une durée prédéterminée (33), dans lequel pour imposer la réinitialisation par le dispositif de commande (12'), un dispositif d'alimentation électrique (15) par lequel le dispositif à processeur (12) est alimenté en énergie électrique (16) est engagé à interrompre (35) un apport d'énergie (18) pour le dispositif à processeur (12).

2. Procédé selon la revendication 1, dans lequel le déclenchement de la procédure d'installation (29) comprend le fait qu'un signal de libération (28) est envoyé au dispositif à processeur (12) par le dispositif de commande (12') et lors de la réception du signal de libération (28) par le dispositif à processeur (12) un redémarrage du dispositif à processeur (12) est déclenché.

3. Procédé selon l'une quelconque des revendications précédentes, dans lequel la procédure d'installation (29) prévoit qu'un signal électrique (31) soit réglé par le dispositif de commande (12') à une entrée de signal électrique (32) du dispositif à processeur (12) pendant le redémarrage du dispositif à processeur (12) et un logiciel d'exploitation (OS) du dispositif à processeur (12) est remplacé par le paquet de code de programme (19) par un chargeur d'amorçage (14) du dispositif à processeur (12) dans le cas où, pendant un redémarrage, le signal (31) se trouve à l'entée de signal (32).

4. Procédé selon l'une quelconque des revendications précédentes, dans lequel le dispositif de commande (12') est actionné avec un système d'exploitation qui est différent d'un système d'exploitation (OS) du dispositif à processeur (12).

5. Procédé selon l'une quelconque des revendications précédentes, dans lequel le dispositif de commande (12') est mis à disposition par un microcontrôleur (₁ₗC).

6. Appareil (10) comportant un dispositif à processeur (12) et un dispositif de commande (12') supplémentaire, dans lequel l'appareil (10) est conçu pour exécuter un procédé selon l'une quelconque des revendications précédentes.

7. Appareil (10) selon la revendication 6, dans lequel l'appareil (10) est configuré comme un appareil de commande pour un véhicule automobile (11) ou comme un terminal mobile ou un dispositif de calcul stationnaire.

8. Véhicule automobile (11) comportant un appareil (10) selon la revendication 6 ou 7.
